# EUROPÄISCHE PATENTSCHRIFT

(11) **EP 0 978 750 B1**
(45) Veröffentlichungstag und Bekanntmachung des Hinweises auf die Patenterteilung: **16.04.2003**
(21) Anmeldenummer: 99115465.9
(22) Anmeldetag: 05.08.1999
(51) Int. Cl.: G02C 5/22

(54) **Brille**
Spectacles
Lunettes

(30) Priorität: 05.08.1998 DE 19835386
(43) Veröffentlichungstag der Anmeldung: 09.02.2000
(73) Patentinhaber: Temming, Markus, 33334 Gütersloh (DE)
(72) Erfinder: Temming, Markus, 33334 Gütersloh (DE)
(74) Vertreter: Rolf, Gudrun

(56) Entgegenhaltungen:
- EP-A- 0 667 552
- EP-A- 0 926 530
- DE-A- 4 341 830
- FR-A- 2 658 231
- US-A- 1 504 212
- US-A- 5 589 895

## Beschreibung

Die Erfindung betrifft eine Brille aus einem Brillengestell mit einer Halterung für die Brillengläser und mit über Scharniere angelenkten Bügeln gemäß dem Oberbegriff des Hauptanspruches.

Es ist eine Brille bekannt, DE 43 41 830 A1, die einen Scharnierblock aufweist, welcher eine in einer senkrechten Richtung verlaufende zylindrische Ausnehmung zur Aufnahme des Endes eines Brillenbügels besitzt und in den eine radiale Ausnehmung eingebracht ist, in die sich ein Stift erstreckt, der radial im sich in die Ausnehmung erstreckenden Ende eines Brillenbügels gelagert ist, so daß der Stift zum einen eine Schwenkbegrenzung und zum anderen eine Verliersicherung für den Brillenbügel darstellt.

Nachteilig an dem vorbekannten Scharnier ist, daß die Fertigung der filigranen Teile, insbesondere des extrem kleinen Stiftes in der radialen Ausnehmung des Scharnierblockes einen erheblichen Fertigungsaufwand erfordert, wobei sich bei der Fertigung die aufwendige Befestigungsart des Scharnierblockes an einem Brillengestell durch Löten negativ bemerkbar macht.

Weiterhin ist ein Scharnier mit einem Scharnierblock bekannt, US 5 570 492, der ebenfalls stoffschlüssig an einem Brillengestell angeordnet werden muß.

Ein anderes bekanntes Scharnier, US 5 589 895, weist einen am Fortsatz eines Brillengestelles angeformten Scharnierblock auf, was konstruktionsbedingt einen erheblichen Fertigungsaufwand mit sich bringt.

Aufgabe der Erfindung ist es, eine Brille zur Verfügung zu stellen, die ein fortschrittliches neues Brillengestell mit wirtschaftlicher herzustellenden Scharnieren aufweist.

Die Lösung dieser Aufgabe wird in Verbindung mit den Oberbegriffsmerkmalen erfindungsgemäß durch die im kennzeichnenden Teil des Patentanspruches 1 angegebene technische Lehre vermittelt.

Das aus einem Scharnierblock bestehende erfinderische Scharnier weist eine zylindrische Ausnehmung für das Bügelende eines Brillenbügels sowie in der der Eintrittsseite eines Bügelendes entgegengesetzten Stirnseite eine radiale Ausnehmung für das Endstück eines Bügelendes auf, welches in diese hinein umgebogen ist, wobei die Seitenränder des Scharnierblockes den möglichen Schwenkwinkel des Bügels begrenzen.

Ein solches Scharnier besitzt den Vorteil einer einfachen Herstellbarkeit und einer leichten Montage der zusammengehörigen Bauteile, ist bei einer beständigen Festigkeit extrem wartungsarm und erübrigt durch eine Art Stecksystem stoffschlüssige Verbindungsverfahren zur Verbindung mit dem Brillengestell, wie Schweißen oder Löten.

Der Scharnierblockes ist nicht unmittelbar am Brillengestell befestigt, sondern an einem sich in die Richtung des Bügels erstreckenden Fortsatz, wobei der Scharnierblock eine zweite, in vertikaler Richtung verlaufende Aufnahme für den Fortsatz aufweist und das Endstück des Fortsatzes in eine stirnseitige Ausnehmung des Scharnierblockes umgebogen ist, deren Öffnungsweite jedoch dem Außenmaß des Endstückes des Fortsatzes des Brillengestelles entspricht, so daß der Scharnierblock gegenüber dem Fortsatz nicht verdrehbar ist. Besonders vorteilhaft daran ist, daß keine stoffschlüssige Verbindung zwischen dem Scharnierblock und dem Brillengestell hergestellt werden muß, da diese Verbindung durch einen einfachen Biegevorgang erzeugt werden kann.

Weitere vorteilhafte Ausgestaltungen des Gegenstandes der Erfindung ergeben sich aus und in Kombination mit den weiteren Unteransprüchen.

In der zylindrischen Ausnehmung des Scharnierblockes kann vorteilhafterweise eine Kunststoffhülse eingesetzt sein, die eine Durchtrittsöffnung für das Bügelende aufweist, wodurch eine dauerhafte Führung des Bügels und ein gewisses Maß an Widerstand bei dem Auf- und Zuklappen der Bügel erzielt werden kann, so daß ein Bügel beispielsweise auch in einer aufgeklappten Stellung in dieser verbleibt und eine Brille einhändig aufgesetzt werden kann, ohne daß ein unbeabsichtigtes Einklappen des Bügels erfolgen kann. Weiterhin wird dadurch der korrekte und feste Sitz der Brille gewährleistet.

Die Hülse ist bevorzugt mit einem Außengewinde versehen und in einem Innengewinde der Ausnehmung für das Bügelende verschraubt, oder aber das Außengewinde wird während des Einschraubens in der Oberfläche der Hülse erzeugt, so daß der Herstellungsprozeß des Gewindeschneidens entfallen kann. Durch die Anordnung einer zwischengeschalteten weiteren Hülse oder der Ausführung des Gewindes als Bewegungsgewinde kann die Querschnittsform eines Bügels von der Kreisform abweichen, so daß mittels dieser bevorzugten Ausführungsform die Variationsmöglichkeit in der Gestaltung einer Brille wesentlich vergrößert werden kann.

Gemäß einer weiteren bevorzugten Ausführungsform der Erfindung weist der Scharnierblock im Bereich des Endstückes des Bügelendes eine stirnseitige radiale Ausnehmung auf, in die das Endstück des Bügelendes umgebogen ist, so daß eine Drehbewegung eines Bügels dort einen definierten Auf- und Zuschlag findet, wo das Endstück des Bügelendes gegen eine Seitenwand des Scharnierblockes anstößt. Auf diese einfache Art und Weise kann eine wirkungsvolle Begrenzung des Schwenkwinkels eines Bügels erzielt werden.

Denkbar ist auch eine vertauschte Anordnung der stirnseitigen Ausnehmungen für die Endstücke von Bügel und Fortsatz und der Ausgestaltung des Gelenks, so daß der Scharnierblock bügelfest ist und sich um den Fortsatz herum dreht. Bei einer weiteren Ausführungsform können auch beide Enden, dann in einem entsprechend kleineren Winkel und auch jeweils in Hülsen, verdrehbar gelagert sein.

Nachfolgend ist ein Ausführungsbeispiel der Erfindung anhand von Zeichnungen näher beschrieben. Es zeigen:

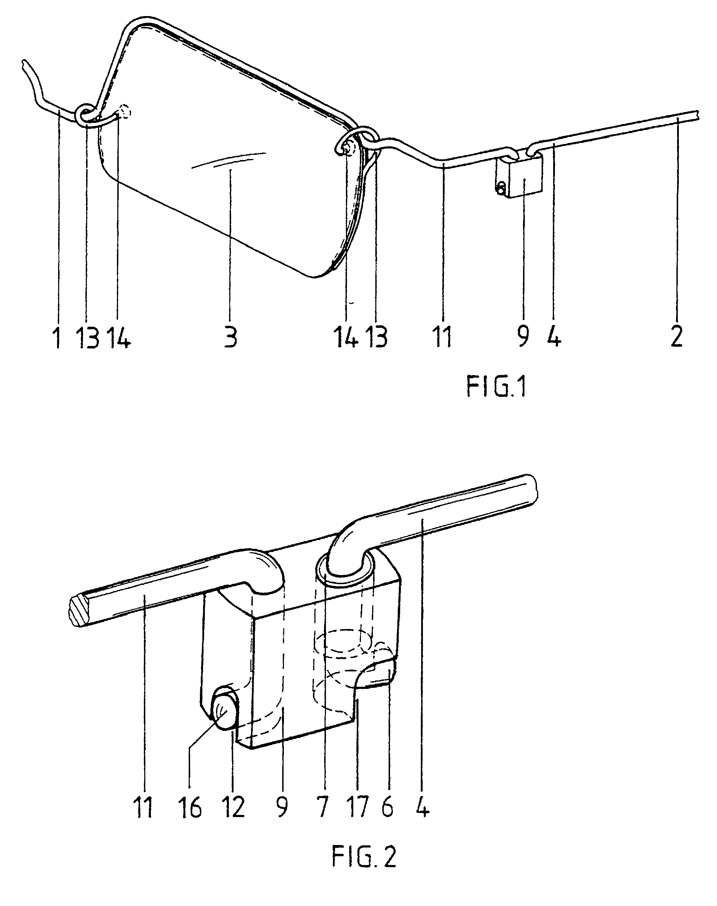

- Fig. 1: eine Teilansicht eines Brillengestells mit einer Halterung für ein Brillenglas und einem Scharnier,
- Fig. 2: eine vergrößerte Darstellung des Scharniers der Fig. 1,

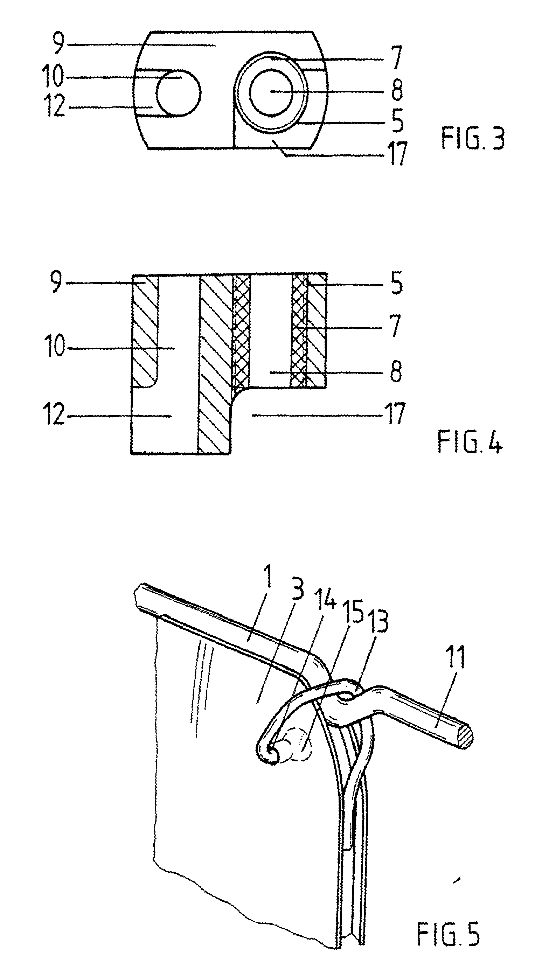

- Fig. 3: eine Ansicht von unten auf das Scharnier gemäß der Fig. 2,
- Fig. 4: eine Seitenansicht des vorgenannten Scharniers im Schnitt und
- Fig. 5: eine vergrößerte Darstellung der Halterung für ein Brillenglas.

Die Brille besteht aus einem Brillengestell 1 mit einer Halterung für die Brillengläser 3 und mit über jeweils einen Scharnierblock 9 angelenkten Bügeln 2. Der Scharnierblock 9 besitzt eine in einer senkrechten Richtung eingebrachte zylindrische Ausnehmung 5 für das Bügelende 4, welches etwa rechtwinklig umgeformt ist und sich in die Ausnehmung 5 erstreckt. Auf der der Eintrittsseite des Bügelendes 4 entgegengesetzten Stirnseite des Scharnierblockes 9 ist über den Schwenkbereich eines Bügels 2 eine radiale Ausnehmung 12 eingebracht, in die ein radial umgebogenes Endstück 6 des Bügelendes 4 eingreift.

In der zylindrischen Ausnehmung 5 des Scharnierblockes 9 ist eine Hülse 7 eingesetzt, die eine Durchtrittsöffnung 8 mit einer dem Bügelende 4 entsprechenden Querschnittsform besitzt. Die Hülse 7 weist ein Außengewinde auf und ist in die mit einem Innengewinde versehene zylindrische Ausnehmung 5 des Scharnierblockes 9 eingeschraubt. Das Material der Hülse 7 weist einen hohen Reibungsquotienten auf, so daß zur Bewegung des Bügels 2 mindestens eine geringe Kraft erforderlich ist und der Bügel nicht frei beweglich ist.

Der Scharnierblock 9 ist im wesentlichen quaderförmig ausgebildet und besitzt eine zweite Aufnahme 10 für den Fortsatz 11 des Brillengestelles 1, die parallel zu der Ausnehmung 5 für das Bügelende 4 in den Scharnierblock 9 eingebracht ist und in die sich das rechtwinklig umgebogene Ende des Fortsatzes 11 erstreckt. Auch die Aufnahme 10 für den Fortsatz 11 des Brillengestelles 1 weist auf der der Eintrittsseite entgegengesetzten Stirnseite eine radiale Ausnehmung 12 auf, in die das Ende des Fortsatzes 11 des Brillengestelles 1 umgebogen ist, wobei diese Ausnehmung 12 ein Breitenmaß aufweist, das dem des Fortsatzes 11 entspricht, so daß damit der Scharnierblock 9 an dem Fortsatz 11 und insgesamt am Brillengestell 1 ortsfest angebracht ist.

Nicht zeichnerisch dargestellt ist eine Ausführungsform, bei der die Gestaltung der stirnseitigen Ausnehmungen 12,17 vertauscht sind, so daß der Scharnierblock 9 bügelfest ist und sich um das senkrechte Ende des Fortsatzes 11 dreht. Ebenfalls nicht in den Zeichnungen dargestellt ist eine Variante, bei der beide stirnseitigen Ausnehmungen 12,17 so gestaltet sind, daß beide Enden über einen jeweils geringeren Winkel im Scharnierblock 9 drehbar gelagert sind, wobei beide Gelenke mit einer Hülse 7 ausgestattet sind.

Das erfinderische Scharnier kann ohne Zuhilfenahme von filigranen Schraubwerkzeugen zusammengesetzt und unter Verwendung einfachster Biegeverfahren am Brillengestell 1 befestigt werden.

Die Halterung für ein Brillenglas 3 mittels den Umfang eines Brillenglases 3 mindestens teilweise umschließenden Fadens 13 besteht aus dem Einbringen einer Durchtrittsöffnung 14 für den Faden 13, der hinter der Durchtrittsöffnung 14 mit einer Verdickung 15 versehen ist, so daß er nicht aus der Durchtrittsöffnung 14 herausziehbar ist, wonach der Faden 13 mindestens einfach um das Brillengestell 1 herumgewunden ist und anschließend ein Brillenglas auf bekannte Art und Weise befestigt. Das andere Ende des Fadens 13 kann auf eine herkömmliche Art an einem Brillengestell 1 festgelegt sein oder ebenfalls nach mindestens einer Schlinge um das Brillengestell eine Durchtrittsöffnung 14 eines Brillenglases 3 durchgreifen und dahinter mit einer Verdickung versehen sein.

## Patentansprüche

1. Brillenfassung bestehend aus einem Fassungsvorderteil (1), Scharnierblöcken (9) und Brillenbügeln (2), bei der das Fassungsvorderteil (1) an jeder Außenseite einen nach unten gebogenen Fortsatz (11) und jeder Bügel (2) ein nach unten gebogenes vorderes Bügelende (4) aufweist, und bei der der Scharnierblock (9) eine erste (10) und eine zweite (5) senkrechte Bohrung aufweist, wobei durch die erste Bohrung ein Fortsatz (11) und durch die zweite ein Bügelende (4) gesteckt sind, und welche jeweils an der Unterseite des Scharnierblock (9) in eine erste (12) bzw. zweite (17) radiale Ausnehmung münden, in welche sich ein umgebogenes Ende (16) des Fortsatzes (11) bzw. ein umgebogenes Endstück (6) des Bügelendes (4) erstreckt, und von welchen die zweite Ausnehmung (17) sich über einen Winkelbereich erstreckt, welcher dem Schwenkbereich des Bügels entspricht.

2. Brille nach Anspruch 1, **dadurch gekennzeichnet, daß** in der zweiten Bohrung (5) eine Hülse (7) mit einer Durchtrittsöffnung (8) für das Bügelende (4) eingesetzt ist.

3. Brille nach Anspruch 2, **dadurch gekennzeichnet, daß** die zweite Bohrung (5) ein Innengewinde aufweist und in die Hülse (7) ein Außengewinde eingebracht ist oder beim Einschrauben eingebracht wird und daß die Hülse (7) in der zweiten Bohrung (5) fixiert oder verdrehbor eingesetzt ist.

4. Brille nach einem der Ansprüche 2 bis 3, **dadurch gekennzeichnet, daß** die Hülse (7) aus Kunststoff besteht und einen hohen Reibungsbeiwert aufweist.

5. Brille nach einem der vorgenannten Ansprüche 2 bis 4, **dadurch gekennzeichnet, daß** die Durchtrittsöffnung (8) der Hülse (7) eine der Querschnittsform eines Bügelendes (4) entsprechende Querschnittsform aufweist.

6. Brille nach einem der vorgenannten Ansprüche, **dadurch gekennzeichnet, daß** die erste radiale Ausnehmung (12) in der Stirnseite des Scharnierblockes (9) weiter ist als das umgebogene Ende 16 des Fortsatzes (11) dick und daß die erste Bohrung (10) als Scharnier mit einer Hülse ausgebildet ist.

## Claims

1. Spectacles frame consisting of a frame front part (1), hinge blocks (9) and arms (2), the frame front part (1) having on each outer side a downwardly bent extension (11), and each arm (2) having a downwardly bent front arm end (4), and the hinge block (9) having a first vertical bore (10) and a second vertical bore (5), an extension (11) being inserted through the first bore and an arm end (4) being inserted through the second bore, which extension (11) and arm end (4) open out on the underside of the hinge block (9) into a first radial recess (12) and a second radial recess (17), respectively, into which there extend a bent-back end (16) of the extension (11) and a bent-back endpiece (6) of the arm end (4), respectively, and of which the second recess (17) extends over an angle range which corresponds to the pivot range of the arm.

2. Spectacles according to Claim 1, **characterized in that** a sleeve (7) with a through-opening (8) for the arm end (4) is inserted in the second bore (5).

3. Spectacles according to Claim 2, **characterized in that** the second bore (5) has an internal thread, and an external thread is provided on the sleeve (7) or is formed in the latter when it is screwed in, and **in that** the sleeve (7) is inserted in the second bore (5) in a fixed manner or so as to be able to turn.

4. Spectacles according to one of Claims 2 and 3, **characterized in that** the sleeve (7) is made of plastic and has a high coefficient of friction.

5. Spectacles according to one of preceding Claims 2 to 4, **characterized in that** the through-opening (8) of the sleeve (7) has a cross-sectional shape corresponding to the cross-sectional shape of an arm end (4).

6. Spectacles according to one of the preceding claims, **characterized in that** the first radial recess (12) in the end face of the hinge block (9) is wider than the bent-back end (16) of the extension (11) is thick, and **in that** the first bore (10) is designed as a hinge with a sleeve.

## Revendications

1. Monture de lunettes se composant d'une partie de monture avant (1), de blocs charnière (9) et de branches de lunettes (2), où la partie de monture avant (1) présente, sur chaque côté extérieur, une avancée (11) courbée vers le bas et chaque branche (2) présente une extrémité de branche avant (4) courbée vers le bas, et où le bloc charnière (9) présente un premier (10) et un deuxième (5) alésages verticaux, une avancée (11) étant enfoncée à travers le premier alésage et une extrémité de branche (4) étant enfoncée à travers le deuxième alésage, et celles-ci débouchant à chaque fois au niveau de la face inférieure du bloc charnière (9) dans un premier (12), respectivement un deuxième (17) évidements radiaux, dans lesquels s'étend une extrémité recourbée (16) de l'avancée (11), respectivement un bout recourbé (6) de l'extrémité de branche (4) et dont le deuxième évidement (17) s'étend sur une zone angulaire qui correspond à la zone de pivotement de la branche.

2. Lunettes selon la revendication 1, **caractérisées en ce que** dans le deuxième alésage (5) est insérée une douille (7) avec une ouverture de passage (8) pour l'extrémité de branche (4).

3. Lunettes selon la revendication 2, **caractérisées en ce que** le deuxième alésage (5) présente un filetage interne et un filetage externe est intégré dans la douille (7), ou est réalisé lors du vissage, et **en ce que** la douille (7) est fixée ou est insérée à rotation dans le deuxième alésage (5).

4. Lunettes selon l'une quelconque des revendications 2 à 3, **caractérisées en ce que** la douille (7) est en plastique et présente un coefficient de friction élevé.

5. Lunettes selon l'une quelconque des revendications précédentes 2 à 4, **caractérisées en ce que** l'ouverture de passage (8) de la douille (7) présente une forme en section transversale correspondant à la forme en section transversale de l'extrémité de branche (4).

6. Lunettes selon l'une quelconque des revendications précédentes, **caractérisées en ce que** le premier évidement radial (12) dans la face frontale du bloc charnière (9) est plus large que l'extrémité recourbée 16 de l'avancée (11) est épaisse et **en ce que** le premier alésage (10) est réalisé en tant que charnière avec une douille.
